(19) Europäisches Patentamt
European Patent Office
Office européen des brevets

(11) EP 1 302 088 B1

(12) EUROPÄISCHE PATENTSCHRIFT

(45) Veröffentlichungstag und Bekanntmachung des Hinweises auf die Patenterteilung:
**25.02.2004 Patentblatt 2004/09**

(21) Anmeldenummer: **01960127.7**

(22) Anmeldetag: **19.07.2001**

(51) Int Cl.[7]: **H04Q 7/32**

(86) Internationale Anmeldenummer:
**PCT/DE2001/002731**

(87) Internationale Veröffentlichungsnummer:
**WO 2002/007466 (24.01.2002 Gazette 2002/04)**

(54) **VERFAHREN ZUR BEREITSTELLUNG VON SOFTWARE IN FUNKBASIERTEN ZELLULÄREN KOMMUNIKATIONSNETZEN SOWIE KOMMUNIKATIONSNETZ ZUR DURCHFÜHRUNG DES VERFAHRENS**

METHOD FOR PROVIDING SOFTWARE IN RADIO-BASED CELLULAR COMMUNICATIONS NETWORKS, AND A COMMUNICATIONS NETWORK FOR IMPLEMENTING SAID METHOD

PROCEDE DE MISE A DISPOSITION D'UN LOGICIEL DANS DES RESEAUX DE COMMUNICATION CELLULAIRES A BASE RADIOTELEPHONIQUE ET RESEAU DE COMMUNICATION POUR METTRE LEDIT PROCEDE EN OEUVRE

(84) Benannte Vertragsstaaten:
**DE FR GB**

(30) Priorität: **19.07.2000 DE 10035309**
**11.08.2000 DE 10039420**

(43) Veröffentlichungstag der Anmeldung:
**16.04.2003 Patentblatt 2003/16**

(73) Patentinhaber: **SIEMENS AKTIENGESELLSCHAFT**
**80333 München (DE)**

(72) Erfinder:
- **BECHER, Reinhard**
**81245 München (DE)**
- **DILLINGER, Markus**
**81737 München (DE)**

(56) Entgegenhaltungen:
**EP-A- 0 959 635** **DE-A- 19 737 126**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 302 088 B1

## Beschreibung

Die Erfindung betrifft ein Verfahren zur Bereitstellung von Software in funkbasierten zellulären Kommunikationsnetzen sowie ein Kommunikationsnetz zur Durchführung des Verfahrens.

In heutigen Computernetzwerken bedient man sich zur Bereitstellung von neuer Software, welche im allgemeinen auch als "Software-Upgrade" bezeichnet wird, häufig einer Client-Server-Struktur. Diese zeichnet sich durch einen hierarchischen Aufbau aus, wobei die Software auf einem übergeordneten "Server"-Computer gespeichert ist, welcher auf Anforderung von mit dem Server verbundenen "Client"-Computern diesen die benötigte Software zur Verfügung stellt.

Ausgehend von diesem Grundmodell, welches auch als Single-Server-Architektur bezeichnet wird, existieren weitere Abwandlungen, bei denen z.B. mehrere Server die Anfragen einer Vielzahl von untergeordneten Clients bearbeiten (Multi-Server-Architektur). Es können zur Zwischenspeicherung der Software auch sogenannte Proxy-Server eingesetzt werden, welche in der Hierarchie zwischen dem Client und dem Server angeordnet sind. Die von einem Client angeforderte Software wird bei dieser Architektur im Proxy-Server zwischengespeichert, so dass bei einer erneuten Anfrage eines anderen Clients die Software direkt von dem (in der Regel räumlich näher gelegenen) Proxy-Server angefordert werden kann. Diese Methode wird beispielsweise im Internet zur Zwischenspeicherung von häufig aufgerufenen Webseiten verwendet.

Auch in funkbasierten zellulären Kommunikationsnetzen, wie dem bereits existierenden GSM-Netz (Global System Mobile) oder dem geplanten UMTS-Netz (Universal Mobile Telecommunication System) als Mobilfunknetz der dritten Generation besteht die Notwendigkeit, Software-Upgrades durchzuführen, z.B. ein Upgrade eines WAP (Wireless Application Protocol)-Browsers. Dabei kann die Software sowohl vom Hersteller einer Teilnehmerstation, von einem Netzwerkbetreiber oder auch von einem unabhängigen Serviceprovider bereitgestellt werden.

Aus der EP 0959635 A1 ist ein Verfahren bekannt, bei dem eine feste Infrastruktur (fixed infrastructure) ein Sofwareprogramm in fragmentierter Form an eine Gruppe von Netzwerkabschlüssen (network terminations) über eine Luftschnittstelle rundsendet (broadcasting). Hat ein bestimmter Prozentsatz der Netzwerkabschlüsse alle Fragmente einer vollständigen Programmversion empfangen und dies der festen Infrastruktur durch eine Mitteilung bestätigt (confirmation announcement), stoppt die feste Infrastruktur die Rundsendung des Softwareprogramms.

Wird zum Software-Upgrade eine der eingangs beschriebenen Client-Server-Architekturen verwendet, bei denen die Software zentral auf Servern im Mobilfunknetz gespeichert ist und von dort aus an jede einzelne Teilnehmerstation übertragen wird, ergeben sich bei der grossen Anzahl von Teilnehmerstationen jedoch unakzeptable Wartezeiten. Eine Modellrechnung kann dies verdeutlichen:

Der Download der neuen Software soll maximal 6 Minuten in Anspruch nehmen. Hierzu stehen 100 Server zur Verfügung, welche die Software auf 10 Mio. Teilnehmerstationen verteilen sollen. Bei sequentieller Bearbeitung beansprucht der Download der Software an alle Teilnehmerstationen

$$10.000.000 * 6 \text{ Min.} / 100 \text{ Server} = 10.000 \text{ Stunden} > 1 \text{ Jahr.}$$

Selbst bei einer Erhöhung der Zahl der Server auf 1000 nähme der Software-Upgrade im günstigsten Fall noch immer ca. 1,5 Monate in Anspruch. Eine Erhöhung der Zahl der Server ist jedoch mit erheblichen Kosten verbunden und daher unwirtschaftlich.

Ferner ist in mobilen Kommunikationsnetzen im Gegensatz zu einem Festnetz keine Zuordnung einer Teilnehmerstation zu einem Anschluß des Netzes möglich. Folglich muß bei einer zentralen Bereitstellung von Software durch einen übergeordneten Server (z.B. im GSM-Netz durch eine Basisstation) jede Teil nehmerstation des Kommunikationsnetzes in regelmäßigen zeitlichen Abständen den jeweiligen Server befragen, ob neue Software zum Herunterladen vorliegt. Dies erzeugt eine zusätzliche Last.

Aufgabe der Erfindung ist es daher, ein Verfahren zur Bereitstellung von Software in funkbasierten zellulären Kommunikationsnetzen zu schaffen, welches kurze Übertragungszeiten bei gleichzeitig niedrigen Kosten ermöglicht.

Diese Aufgabe wird durch ein Verfahren zur Bereitstellung von Software in funkbasierten zellulären Kommunikationsnetzen gelöst, bei dem:

- eine Teilnehmerstation, welche die bereitzustellende Software gespeichert hat und in einer Zelle des Kommunikationsnetzes eingebucht ist, einer Speichereinrichtung der Zelle die Verfügbarkeit der Software in der Zelle mitteilt und die Speichereinrichtung einen Eintrag über die Verfügbarkeit der Software erstellt,
- eine Netzeinrichtung eine Nachricht über die Verfügbarkeit der Software an die in der Zelle eingebuchten Teilnehmerstationen sendet,
- eine weitere in der Zelle eingebuchte Teilnehmerstation die Software durch Aussenden einer Nachricht anfordert, wobei die Nachricht mit einer begrenzten Sendeleistung ausgesandt wird, derart, dass die Nachricht nur von Teilnehmerstationen empfangen werden kann, welche sich in einem Abstand von der sendenden Teilnehmerstation befinden, der klein gegen den Durchmesser der Zelle ist, und

- die Software von der Teilnehmerstation unmittelbar an die weitere Teilnehmerstation übertragen wird, wenn die Teilnehmerstation die von der weiteren Teilnehmerstation ausgesandte Nachricht empfangen hat.

Die erfindungsgemäße Aufgabe wird weiterhin durch ein Kommunikationsnetz gemäß Anspruch 8 gelöst.

Vorteilhafte Ausgestaltungen sind Gegenstand von abhängigen Ansprüchen.

Das erfindungsgemäße Verfahren bietet insbesondere folgende Vorteile:

1. Der Software-Upgrade erfolgt in der Art eines "Schneeball"-Systems. Jede in einer Zelle eingebuchte Teilnehmerstation, welche die Software gespeichert hat, kann diese an weitere in der Zelle eingebuchte Teilnehmerstationen übertragen. Jede Teilnehmerstation ist somit sowohl Client als auch Server. Durch die unmittelbare Übertragung der Software von einer Teilnehmerstation zu einer oder mehreren weiteren Teilnehmerstationen kann eine nahezu exponentielle Verbreitung der Software erzielt werden. Entsprechend läßt sich die Zeit, nach der alle in einer Zelle eingebuchten Teilnehmerstationen über die Software verfügen können, um ein Vielfaches verringern.
2. Es werden gegenüber einem hierarchischen Client-Server-System Ressourcen eingespart, da zu Beginn des Verfahrens die Software von nur einem Server auf eine Teilnehmerstation des Kommunikationsnetzes übertragen werden kann, welche die Software dann an die anderen Teilnehmerstationen des Kommunikationsnetzes weiterleiten kann.
3. Da die Software von einer Teilnehmerstation an eine weitere Teilnehmerstation auf dem unmittelbaren Weg übertragen werden kann, und eine Netzeinrichtung nur Signalisierungsaufgaben übernimmt, werden zusätzlich Ressourcen geschont.

Von besonderen Vorteil ist es weiterhin, wenn die Nachricht zur Anforderung der Software von der Teilnehmerstation mindestens einmal wiederholt wird. Aufgrund der Mobilität der Teilnehmerstationen ist es möglich, dass sich bei einem ersten Anfordern der in der Zelle verfügbaren Software keine Teilnehmerstation, welche die Software gespeichert hat, in räumlicher Nähe zu der anfordernden Teilnehmerstation befindet. Bei einem wiederholten Aussenden der die Software anfordernden Nachricht kann sich jedoch ergeben, dass sich eine Teilnehmerstation in unmittelbarer Nähe der anfordernden Teilnehmerstation befindet, so daß die Übertragung initiiert werden kann.

Vorteilhaft ist auch, bei jedem Senden der Nachricht zur Anforderung der Software die Sendeleistung schrittweise bis zu ihrer Grenze zu erhöhen. Durch die Reduzierung der Sendeleistung zu Beginn werden Ressourcen geschont. Gleichzeitig kann durch die Steigerung der Sendeleistung mit jedem Aussenden der Nachricht die Reichweite des Senders erhöht werden, sodaß eine größere Anzahl von benachbarten Teilnehmerstationen erreicht werden kann. Die Wahrscheinlichkeit, auf diese Weise eine Teilnehmerstation zu erreichen, welche Träger der zu verteilenden Software ist, wird auf diese Weise erhöht.

Die Erfindung wird anhand von in Figuren dargestellten Ausführungsbeispielen näher erläutert. Im einzelnen stellen dar:

Figur 1 das Anzeigen der Verfügbarkeit einer Software durch eine in einer Zelle eingebuchte Teilnehmerstation bei einer Speichereinrichtung derselben Zelle,

Figur 2 das Eintreten einer Teilnehmerstation, welche auch Träger der bereitzustellenden Software ist, in die Zelle,

Figur 3 das Eintreten zweier Teilnehmerstationen, welche nicht Träger der bereitzustellenden Software sind, in die Zelle,

Figur 4 die Übertragung der Software von einer Teilnehmerstation zu einer benachbarten anderen Teilnehmerstation, und

Figur 5 das Bereitstellen der Software an eine Teilnehmerstation durch eine Netzeinrichtung.

Fig. 1 stellt einen Ausschnitt eines zellulären Kommunikationsnetzes mit vier Zellen Z schematisch dar. Vereinfachend weist jede Zelle Z Wabenform auf. In den Zellen Z ist jeweils zentral eine Netzeinrichtung BS angeordnet, welche die Abwicklung des Funkbetriebs mit Teilnehmerstationen TNR in der Zelle Z übernimmt. Unter einer Teilnehmerstation TNR wird im Rahmen dieser Erfindung eine Vielzahl unterschiedlichster Endgeräte, wie z.B. Mobiltelefone, Drucker, Pager, etc. verstanden.

In einer Teilnehmerstation TNR1 ist eine bereitzustellende Software gespeichert. Dabei kann die Software beispielsweise von einem in dem Kommunikationsnetz oder außerhalb des Netzes befindlichen Server auf die Teilnehmerstation TNR1 übertragen worden sein. Beim Wechsel der Teilnehmerstation TNR1 von einer Zelle Z in eine neue Zelle ZNEU, wie in Fig. 1 dargestellt, teilt die Teilnehmerstation TNR1 einer Speichereinrichtung BL der Zelle ZNEU mit, daß die Software den Teilnehmerstationen TNR innerhalb der Zelle ZNEU zur Verfügung steht. Hierzu sendet die Teilnehmerstation TNR1 eine Nachricht an die Speichereinrichtung BL, welche die Verfügbarkeit der Software mitteilt. Die Speichereinrichtung BL verwaltet diese Information in geeigneter Weise, z.B. als Eintrag in einer aktualisierbaren Tabelle. Erfindungsgemäß enthält der Eintrag zumindest eine Information über die Art der bereitgestellten Software; es kann jedoch auch zusätzlich eine Verknüpfung mit einer die Teilnehmerstation TNR1 identifizierenden Adresse hergestellt werden.

Die Netzeinrichtung BS teilt über einen Übertragungskanal (z.B. BCCH) in einem nächsten Verfahrensschritt den Teilnehmerstationen TNR der Zelle ZNEU mit, dass die Software in der Zelle ZNEU zur Verfügung steht. Ferner werden auch Signalisierungsinformationen mit übertragen., Es wird beispielsweise mitgeteilt, auf welchem physikalischen Übertragungskanal und mit welcher maximalen Sendeleistung die Teilnehmerstationen TNR die Software anfordern dürfen.

Wechselt, wie in Fig. 2 dargestellt, eine weitere Teilnehmerstation TNR2 in die Zelle ZNEU, so vergleicht die Teilnehmerstation TNR2 ihre eigene Software mit der Einträgen in der Speichereinrichtung BL bezüglich der in der Zelle ZNEU hinterlegten Software. Stellt die Teilnehmerstation TNR2 dabei fest, dass bereits ein Eintrag über die Verfügbarkeit der eigenen Software in der Speichereinrichtung BL vorhanden ist und folglich die Software in der Zelle ZNEU zur Verfügung steht, so kann erfindungsgemäß eine Verknüpfung des vorhandenen Eintrags mit der Teilnehmerstaton TNR2 erfolgen. Sind derartige Verknüpfungen in der Speichereinrichtung BL nicht vorgesehen, so erfolgt keine weitere Aktion.

Teilnehmerstationen TNR3 bzw. TNR4, welche sich in die Zelle ZNEU hineinbewegen, wie in Fig. 3 dargestellt, erhalten die Nachricht der Netzeinrichtung BS bezüglich der in der Zelle ZNEU verfügbaren Software. Durch einen Vergleich der in der Zelle ZNEU verfügbaren Software mit der in den Teilnehmerstationen TNR3 bzw. TNR4 gespeicherten Software stellen die Teilnehmerstationen TNR3 bzw. TNR4 z.B. jeweils fest, dass sie diese Software beispielsweise für ein Upgrade benötigen.

Die Teilnehmerstation TNR3 fordert über einen zellspezifischen Übertragungskanal, z.B. den RACH (Random Access Channel, GSM-Netz) die Software an. Hierzu sendet die Teilnehmerstation TNR3 eine Nachricht NR2 mit einer begrenzten Sendeleistung, wobei die Nachricht NR2 an die weiteren Teilnehmerstationen TNR in der Zelle gerichtet ist. Die Sendeleistung wird vorzugsweise derart gewählt, dass nur zu der Teilnehmerstation TNR3 benachbarte Teilnehmerstationen TNR die Nachricht NR2 empfangen können. Insbesondere beträgt ein Senderadius der Teilnehmerstation TNR3 zum Senden der'Nachricht NR2 weniger als die Hälfte des Zellradius. Vorzugsweise können nur Teilnehmerstationen TNR die Nachricht empfangen, welche sich im Bereich von ca. 20 m von der Teilnehmerstation TNR3 befinden. Hält sich in diesem Bereich keine Teilnehmerstation auf, welche die angeforderte Software zur Verfügung stellen kann, kann die Nachricht NR2 ein- oder mehrfach wiederholt werden. Gleichzeititg sieht das erfindungsgemäße Verfahren vor, dass die Sendeleistung bei jeder Wiederholung der Nachricht NR2 gesteigert werden kann, bis die Sendeleistung einen Maximalwert erreicht. Auf diese Weise vergrößert sich bei jedem Aussenden der Nachricht NR2 der Senderadius und es erhöht sich damit die Wahrscheinlichkeit, dass sich Teilnehmerstationen TNR in dem Senderadius aufhalten, welche die angeforderte Software zur Verfügung stellen können.

Die Übertragung der Software kann in einem anschließenden Schritt (Fig. 4) unmittelbar von der Teilnehmerstation TNR zu der Teilnehmerstation TNR3 ohne Vermittlung einer Netzeinrichtung, wie z.B. die Basisstation, erfolgen. Dieser Verfahrensschritt findet vorzugsweise dann Anwendung, wenn die Teilnehmerstationen TNR und TNR3 netzunabhängig arbeiten, wie es z.B. durch den Standard "Bluetooth" vorgegeben ist.

Es ist auch möglich, eine Übertragungsverbindung zwischen den beiden Teilnehmerstationen TNR und TNR3 durch Vermittlung der Netzeinrichtung NE herzustellen. Hierzu übernimmt die Netzeinrichtung NE die Signalisierung der Übertragungsverbindung, während die Übertragung der Software direkt von Teilnehmerstation TNR zu Teilnehmerstation TNR3 stattfinden kann. Zweckmäßigerweise wird diese Variante gewählt, wenn die Teilnehmerstationen TNR der Verantwortung des Kommunikationsnetzes unterliegen. Ein Beispiel hierfür stellt der "direct mode" für den Standard HIPERLAN dar.

Beispielhaft kann der Aufbau einer Übertragungsverbindung nach Art des "direct mode" zwischen zwei Teilnehmerstationen TNRA und TNRB folgendermaßen aussehen:

Eine Teilnehmerstation TNRA, welche eine direkte Übertragungsverbindung zu einer weiteren Teilnehmerstation TNRB aufbauen möchte, sendet über einen zellspezifischen Übertragungskanal, z.B. den RACH (GSM-Netz), ein leistungsbegrenztes Signal aus. Dabei kann die Sendeleistung als maximale oder als feste Sendeleistung festgelegt werden. Die Teilnehmerstation TNRA legt durch eine Begrenzung der Sendeleistung unterhalb des festgelegten Maximums ihren Senderadius selbst fest. Dies ist insbesondere dann vorteilhaft, wenn nur bestimmte, benachbarte Teilnehmerstationen angesprochen werden sollen.

Die Teilnehmerstation TNRA erzeugt für die Anforderung einer Software bzw. für die Anforderung von allgemeinen Daten eine Nachricht NR2, mit der den Teilnehmerstationen TNR in der Zelle mitgeteilt wird, welche Software die Teilnehmerstation TNRA anfordert. Hierzu ist es erforderlich, dass die Teilnehmerstationen TNR den Übertragungskanal RACH abhören und vergleichen, ob die angeforderte Software mit der eigenen gespeicherten Software übereinstimmt. Meldet sich nach einer definierten Zeit keine Teilnehmerstation TNR, so wird die Nachricht NR2 wiederholt. Eine Teilnehmerstation TNRB, welche die Nachricht NR2 empfängt und die gewünschte Software zur Verfügung stellen kann, meldet den Empfang der Nachricht NR2 und deren Inhalt an die Netzeinrichtung NE. Die Netzeinrichtung NE signalisiert anschließend den Aufbau einer Übertragungsverbindung zwischen der Teilnehmerstation TNRA und derjenigen Teilnehmerstation TNR, welche als erste den Empfang der Nachricht NR2 der Netzeinrichtung NE meldete.

Steht im Senderadius der Teilnehmerstation TNR3 zum Zeitpunkt der Anforderung der Nachricht NR2 keine Teilnehmerstation TNR bereit, welche Träger der Software ist, so kann erfindungsgemäß die Teilnehmerstation TNR3 über einen geeigneten Übertragungskanal die Software bei der Netzeinrichtung NE anfordern. In der Speichereinrichtung BL sind beispielsweise Adressen eines Servers hinterlegt, welcher die Software zur Verfügung stellt oder es sind die in der Zelle eingebuchten Teilnehmerstationen TNR vermerkt, welche Träger der bereitzustellenden Software sind. Mit Hilfe dieser Einträge in der Speichereinrichtung BL initiiert die Netzeinrichtung NE in der Folge eine Übertragung der Software von dem Server bzw. der Teilnehmerstation TNR zu der die Software anfordernden Teilnehmerstation TNR3.

Gemäß einer weiteren Variante der Erfindung (Fig. 5) kann nach einer Anforderung der Software bei der Netzeinrichtung NE durch die Teilnehmerstation TNR4 die Netzeinrichtung NE ein zellenweites Paging aller Teilnehmerstationen TNR bezüglich der angeforderten Software durchführen. Meldet sich eine Teilnehmerstation TNR2, welche Träger der Software ist, bei der Netzeinrichtung NE, stellt die Netzeinrichtung NE daraufhin eine Verbindung zwischen Teilnehmerstation TNR2,der Netzeinrichtung NE und der anfordernden Teilnehmerstation TNR43 zur Übertragung der Software her.

Befindet sich keine Teilnehmerstation TNR, welche Träger der angeforderten Software ist, mehr in der Zelle, stellt die Netzeinrichtung NE eine Verbindung zu einem Server her, der die Software gespeichert hat. Der Server kann sich dabei innerhalb oder außerhalb des Kommunikationsnetzes befinden. Der Server kann einem Diensteanbieter, einem Hersteller oder auch einem Netzwerkbetreiber zugeordnet sein.

**Patentansprüche**

1. Verfahren zur Bereitstellung von Software in funkbasierten zellulären Kommunikationsnetzen, bei dem

   - eine Teilnehmerstation (TNR1), welche die bereitzustellende Software gespeichert hat und in einer Zelle des Kommunikationsnetzes eingebucht ist, einer Speichereinrichtung (BL) der Zelle die Verfügbarkeit der Software in der Zelle mitteilt und die Speichereinrichtung (BL) einen Eintrag über die Verfügbarkeit der Software erstellt,
   - eine Netzeinrichtung (NE) eine Nachricht (NR) über die Verfügbarkeit der Software an die in der Zelle eingebuchten Teilnehmerstationen (TNR) sendet,
   - eine weitere in der Zelle eingebuchte Teilnehmerstation (TNR3) die Software durch Aussenden einer Nachricht (NR2) anfordert, und
   - die Software von der Teilnehmerstation (TNR1) unmittelbar an die weitere Teilnehmerstation (TNR3) übertragen wird, wenn die Teilnehmerstation (TNR1) die von der weiteren Teilnehmerstation (TNR3) ausgesandte Nachricht (NR2) empfangen hat.

2. Verfahren nach Anspruch 1, **dadurch gekennzeichnet, dass** die Nachricht (NR2) mit einer begrenzten Sendeleistung ausgesandt wird, derart, dass die Nachricht nur von Teilnehmerstationen (TNR) empfangen werden kann, welche sich in einem Abstand von der sendenden Teilnehmerstation (TNR3) befinden, der klein gegen den Durchmesser der Zelle ist,.

3. Verfahren nach Anspruch 1 oder 2, **dadurch gekennzeichnet, dass** die Teilnehmerstation (TNR1) eine Empfangsbestätigung an die Netzeinrichtung (NE) schickt und dass die Netzeinrichtung (NE) eine Verbindung zur Übertragung der Software zwischen der Teilnehmerstation (TNR1) und der weiteren Teilnehmerstation (TNR3) aufbaut.

4. Verfahren nach Anspruch 1, 2 oder 3, **dadurch gekennzeichnet, dass** bei fehlgeschlagener Verbindungsherstellung zwischen zwei Teilnehmerstationen (TNR) die Nachricht (NR2) zur Anforderung der Software von der weiteren Teilnehmerstation (TNR3) mindestens einmal wiederholt wird.

5. Verfahren nach Anspruch 4, **dadurch gekennzeichnet, dass** bei jedem Senden der Nachricht (NR2) die Sendeleistung schrittweise bis zum Erreichen einer maximalen Sendeleistung erhöht wird.

6. Verfahren nach einem der vorhergehenden Ansprüche, **dadurch gekennzeichnet, dass** die in der Speichereinrichtung (BL) gespeicherten Mitteilungen nach Ablauf einer festgelegten Zeit gelöscht werden.

7. Verfahren nach einem der vorhergehenden Ansprüche, **dadurch gekennzeichnet, dass** in der Speichereinrichtung in Bezug auf eine Software, welche den Teilnehmerstationen des Kommunikationsnetzes zur Übertragung zur Verfügung steht, ein Ablaufdatum gespeichert wird.

8. Verfahren nach einem der vorhergehenden Ansprüche, **dadurch gekennzeichnet, dass** eine Teilnehmerstation, welche die Zelle verläßt, in der sie eingebucht ist, der Speichereinrichtung (BL) dieses mitteilt und dass die Speichereinrichtung die Mitteilungen dahingehend aktualisiert, dass die Software von der Teilnehmerstation nicht mehr zur Übertragung zur Verfügung gestellt wird.

9. Zelluläres Kommunikationsnetz

- mit einer in einer Zelle des Kommunikationsnetzes eingebuchten Teilnehmerstation (TNR1) zum Speichern einer Software und zum Mitteilen der Verfügbarkeit der Software in der Zelle sowie zum unmittelbaren Übertragen der Software an eine weitere in der Zelle eingebuchte Teilnehmerstation (TRN3) mit Mitteln zum Aussenden einer Nachricht (NR2) zur Anforderung der Software,
- mit einer Speichereinrichtung (BL) zur Erstellung und Speicherung von Einträgen über die Verfügbarkeit der Software,
- und mit einer Netzeinrichtung (NE) zum Senden einer Nachricht (NR) über die Verfügbarkeit der Software an in der Zelle eingebuchte Teilnehmerstationen (TNR).

## Claims

1. Method for providing software in radio-based cellular communications networks, in which

- a subscriber station (TNR1) which has stored the software to be provided and is registered with a cell of the communications network notifies a storage device (BL) of the cell of the availability of the software in the cell and the storage device (BL) creates a record of the software availability,
- a network device (NE) sends a message (NR) indicating the availability of the software to the subscriber stations (TNR) registered with the cell,
- a further subscriber station (TNR3) registered with the cell requests the software by sending a message (NR2), and
- the software is transmitted directly from the subscriber station (TNR1) to the further subscriber station (TNR3) when the subscriber station (TNR1) has received the message (NR2) transmitted by the further subscriber station (TNR3).

2. Method according to Claim 1, **characterized in that** the message (NR2) is transmitted with a limited transmit power so that the message can only be received by subscriber stations (TNR) which are at a distance from the transmitting subscriber station (TNR3) which is short compared with the diameter of the cell.

3. Method according to Claim 1 or 2, **characterized in that** the subscriber station (TNR1) sends a receipt confirmation to the network device (NE) and the network device (NE) sets up a connection in order to transmit the software between the subscriber station (TNR1) and the further subscriber station (TNR3).

4. Method according to Claim 1, 2 or 3, **characterized in that**, if the connection set-up between two subscriber stations (TNR) fails, the message (NR2) requesting the software is repeated at least once by the further subscriber station (TNR3).

5. Method according to Claim 4, **characterized in that**, with each transmission of the message (NR2), the transmit power is increased in steps until it attains a maximum transmit power.

6. Method according to one of the preceding claims, **characterized in that** the messages stored in the storage device (BL) are deleted at the end of a defined time.

7. Method according to one of the preceding claims, **characterized in that** an expiry date relating to software which is available for transmission to the subscriber stations of the communications network is stored in the storage device.

8. Method according to one of the preceding claims, **characterized in that** a subscriber station which leaves the cell with which it is registered notifies this to the storage device (BL), and the storage device updates the notifications to indicate that the software is no longer available for transmission from the subscriber station.

9. Cellular communications network

- having a subscriber station (TNR1) which is registered with a cell in the communications network, for storing software and for signalling the availability of the software in the cell, and for direct transmission of the software to a further subscriber station (TNR3) which is registered with the cell, having means for transmitting a message (NR2) to request the software,
- having a memory device (BL) for creating and storing entries relating to the availability of the software,
- and having a network device (NE) for transmitting a message (NR) about the availability of the software to subscriber stations (TNR) which are registered with the cell.

**Revendications**

1. Procédé pour la mise à disposition de logiciel dans des réseaux de communication cellulaire à base radiotéléphonique, avec lequel

- une station d'abonné (TNR1), qui a stocké le logiciel à mettre à disposition et est enregistrée dans une cellule de réseau de communication, signale la disponibilité du logiciel dans la cellule à un appareil de stockage (BL) de la cellule et l'appareil de stockage (BL) établit un enregistrement sur la disponibilité du logiciel,
- un appareil de réseau (NE) envoie un message (NR) sur la disponibilité du logiciel aux stations d'abonnés (TNR) enregistrées dans la cellule,
- une autre station d'abonné (TNR3) enregistrée dans la cellule demande le logiciel par l'envoi d'un message (NR2), et
- le logiciel est transmis de la station d'abonné (TNR1) directement à l'autre station d'abonné (TNR3), lorsque la station d'abonné (TNR1) a reçu le message (NR2) envoyé par l'autre station d'abonné (TNR3).

2. Procédé selon la revendication 1, **caractérisé en ce que** le message (NR2) est émis avec une puissance d'émission limitée de telle sorte que le message ne peut être reçu que par des stations d'abonnés (TNR) qui se trouvent à une distance de la station d'abonné émettrice (TNR3) qui est inférieure par rapport au diamètre de la cellule.

3. Procédé selon la revendication 1 ou 2, **caractérisé en ce que** la station d'abonné (TNR1) envoie un accusé de réception à l'appareil de réseau (NE) et **en ce que** l'appareil de réseau (NE) établit une liaison pour la transmission du logiciel entre la station d'abonné (TNR1) et l'autre station d'abonné (TNR3).

4. Procédé selon la revendication 1, 2 ou 3, **caractérisé en ce que**, en cas d'échec de l'établissement de liaison entre deux stations d'abonnés (TNR), le message (NR2) pour la demande du logiciel par l'autre station d'abonné (TNR3) est répété au moins une fois.

5. Procédé selon la revendication 4, **caractérisé en ce que**, lors de chaque émission du message (NR2), la puissance d'émission est augmentée progressivement jusqu'à atteindre une puissance d'émission maximale.

6. Procédé selon l'une quelconque des revendications précédentes, **caractérisé en ce que** les messages mémorisés dans l'appareil de stockage (BL) sont supprimés après l'expiration d'un temps défini.

7. Procédé selon l'une quelconque des revendications précédentes, **caractérisé en ce qu'**une date d'expiration est mémorisée dans l'appareil de stockage en ce qui concerne un logiciel qui est mis à la disposition des stations d'abonnés du réseau de communication pour la transmission.

8. Procédé selon l'une quelconque des revendications précédentes, **caractérisé en ce qu'**une station d'abonné, qui quitte la cellule dans laquelle elle est enregistrée, le signale à l'appareil de stockage (BL) et que l'appareil de stockage met à jour les messages en ce sens que le logiciel n'est plus mis à disposition par la station d'abonné pour la transmission.

**9.** Réseau de communication cellulaire

- avec une station d'abonné (TNR1) enregistrée dans une cellule du réseau de communication pour le stockage d'un logiciel et pour la notification de disponibilité du logiciel dans la cellule ainsi que pour la transmission directe du logiciel à une autre station d'abonné (TNR3) enregistrée dans la cellule avec des moyens pour l'envoi d'un message (NR2) concernant la demande du logiciel,
- avec un appareil de stockage (BL) pour l'établissement et le stockage d'enregistrements concernant la disponibilité du logiciel,
- et avec un appareil de réseau (NE) pour l'envoi d'un message (NR) concernant la disponibilité du logiciel à des stations d'abonnés (TNR) enregistrées dans la cellule.

FIG 1

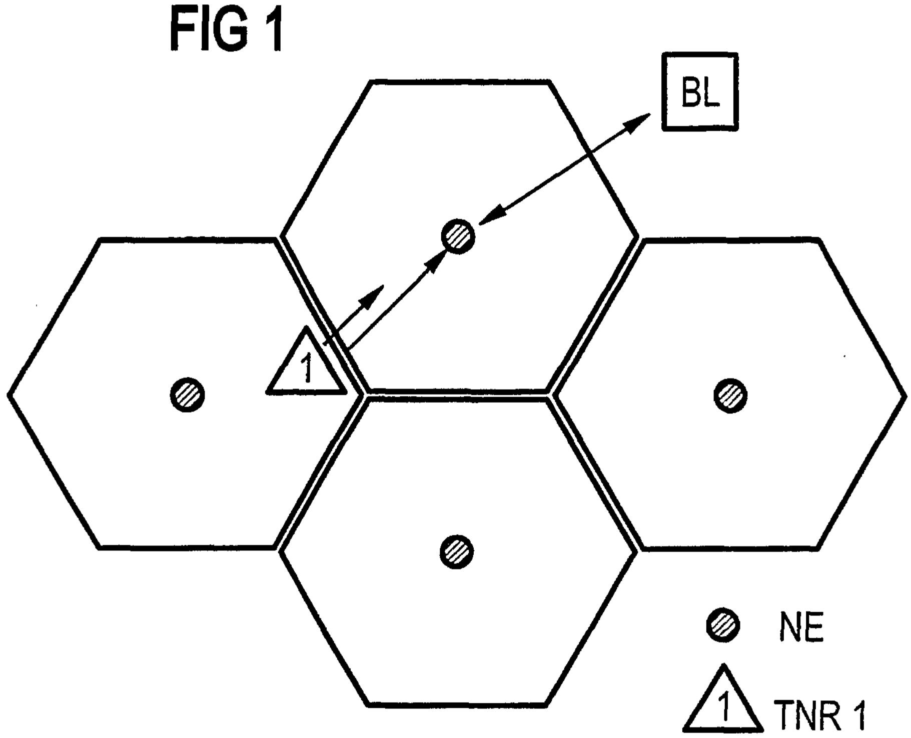


FIG 2

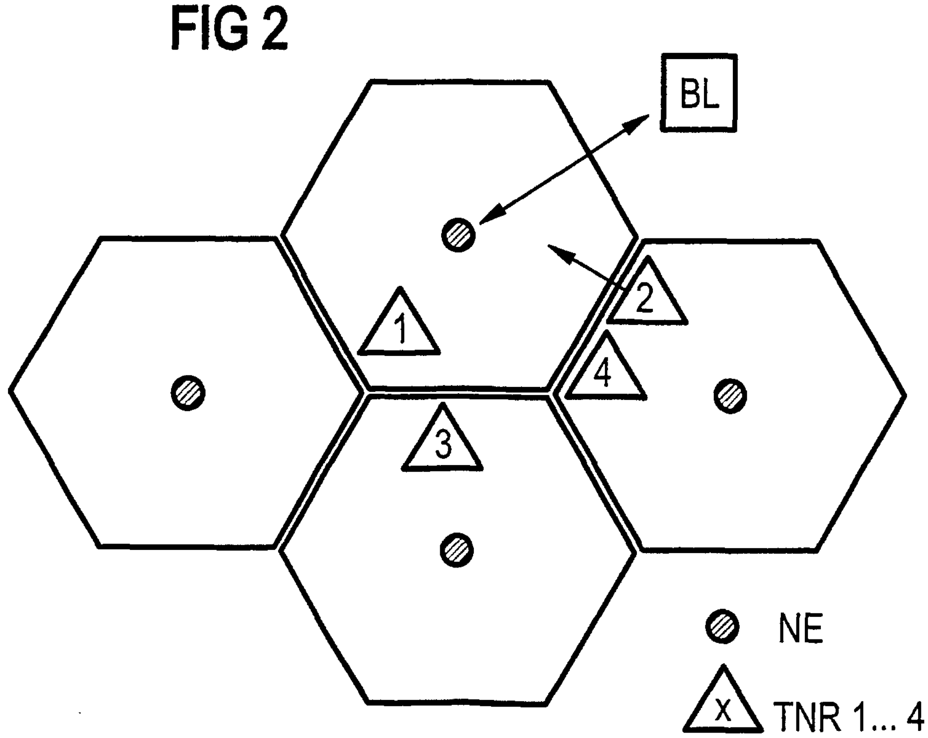

FIG 3

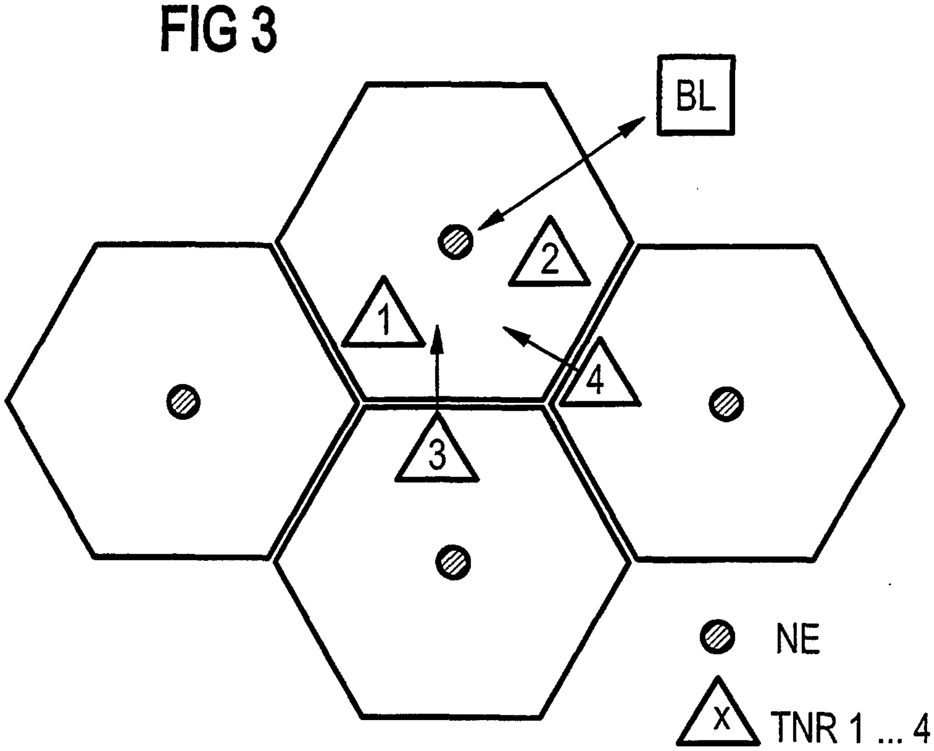


FIG 4

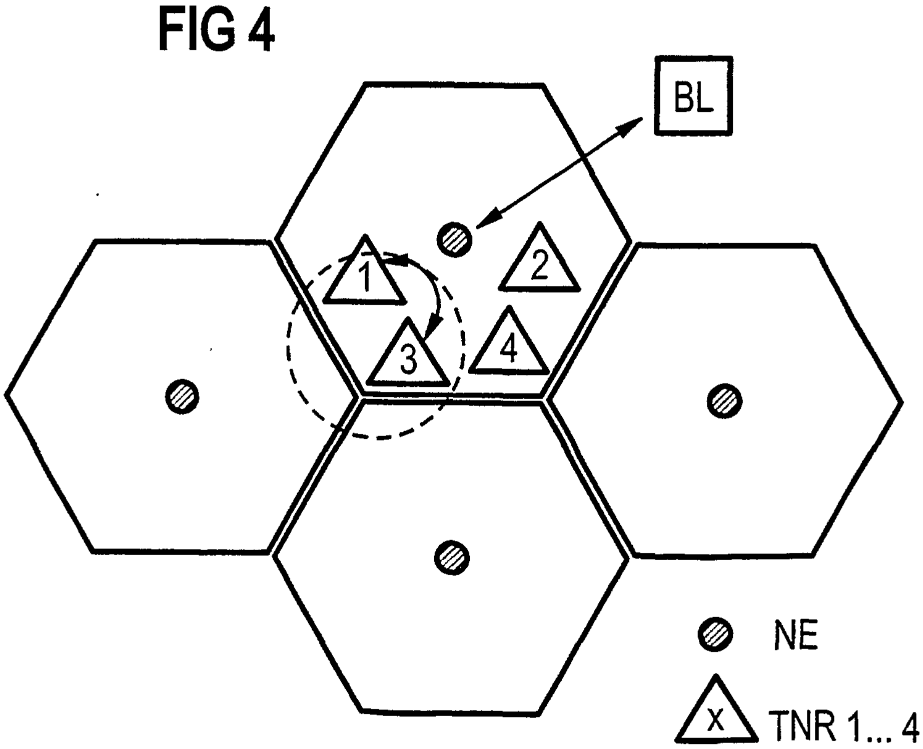

FIG 5

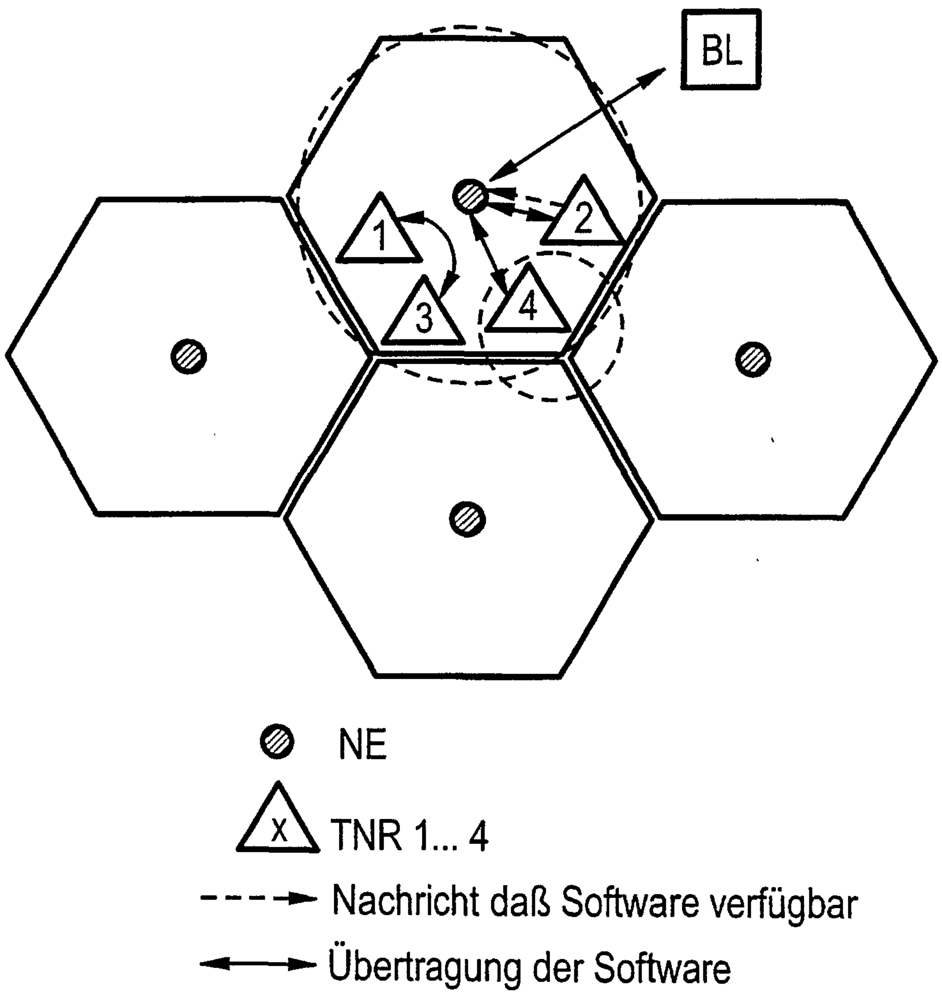
BL
1
2
3
4
NE
X
TNR 1... 4
Nachricht daß Software verfügbar
Übertragung der Software